# EUROPEAN PATENT APPLICATION

(11) **EP 4 701 048 A1**
(43) Date of publication of application: **25.02.2026**
(21) Application number: 25800844.0
(22) Date of filing: 14.03.2025
(51) Int. Cl.: H02K 1/32, H02K 1/276, H02K 9/19

(54) **ROTOR CORE, MOTOR ROTOR, MOTOR, AND AUTOMOBILE**

(30) Priority: 10.05.2024 CN 202410577897
(71) Applicant: Chery Automobile Co., Ltd., Wuhu, Anhui 241006 (CN)
(72) Inventor: LV, Shun, Wuhu, Anhui 241006 (CN); HU, Longfei, Wuhu, Anhui 241006 (CN); TAO, Jun, Wuhu, Anhui 241006 (CN)
(74) Representative: Yang, Shu
(86) International application number: PCT/CN2025/082538
(87) International publication number: WO 2025/232346

(57) **Abstract**

The present application provides a rotor core (1), a motor rotor, a motor, and an automobile. A rotor shaft cavity (11), a plurality of first cooling channels (12), and a plurality of first rotor slots (13) are formed in the rotor core (1); the rotor shaft cavity (11), the first cooling channels (12), and the first rotor slots (13) pass through the rotor core (1) in the axial direction of the rotor core (1); the plurality of first rotor slots (13) and the plurality of first cooling channels (12) are distributed at intervals in the circumferential direction of the rotor core (1), separately; all the first cooling channels (12) are located between the rotor shaft cavity (11) and the first rotor slots (13); and all the first rotor slots (13) are communicated with the first cooling channels (12). By means of the arrangement, a cooling medium flowing in the first cooling channels is in direct contact with permanent magnets in the first rotor slots for heat exchange so as to cool the permanent magnets, thereby preventing the risk of demagnetization of the permanent magnets caused by excessive temperature.

## Description

The present disclosure claims priority to Chinese Patent Application No. CN202410577897.8, filed on May 10, 2024, and entitled "ROTOR CORE, MOTOR ROTOR, MOTOR AND VEHICLE", the disclosure of which is herein incorporated by reference in its entirety.

### TECHNICAL FIELD

The present disclosure relates to the field of motor technologies, and in particular, relates to a rotor core, a motor rotor, a motor, and a vehicle.

### BACKGROUND

With the rapid development of electric vehicles, the requirements for the rotational speed and power density of vehicle drive motors are increasingly high. In high-speed ranges, the motor rotor of the traditional interior permanent magnet synchronous motor experiences increased rotor loss and severe heat generation due to deep flux weakening, and thus it requires cooling to achieve high power density.

In a motor in the related art, a cooling medium for the rotor generally comes from a rotating shaft. A heat source is close to the surface of the rotor, but the cooling medium is far from the heat source, which results in a poor cooling effect, easily increases the risk of demagnetization of a permanent magnet, and affects the performance of the motor.

### SUMMARY

Embodiments of the present disclosure provide a rotor core, a motor rotor, a motor, and a vehicle, and the cooling effect on the motor rotor can be improved.

Specifically, the present disclosure includes the following technical solutions:

According to a first aspect, the embodiments of the present disclosure provide a rotor core, where the rotor core is provided with a rotor shaft cavity, a plurality of first cooling channels, and a plurality of first rotor slots, the rotor shaft cavity, the first cooling channels, and the first rotor slots all run through the rotor core along an axial direction of the rotor core, the first rotor slots and the first cooling channels are respectively spaced apart along a circumferential direction of the rotor core, and each of the first cooling channels is disposed between the rotor shaft cavity and the first rotor slots, and each of the first rotor slots is in communication with the first cooling channels.

By the arrangement, a coolant flowing in the first cooling channels is in direct contact with and exchanges heat with first permanent magnets in the first rotor slots, so as to cool the first permanent magnets, thereby preventing the risk of demagnetization of the first permanent magnets due to an excessively high temperature, which helps improve the performance of the motor.

In some embodiments, the rotor core includes first magnetic poles and second magnetic poles of opposite polarities alternately distributed along the circumferential direction of the rotor core, and the first rotor slot is disposed between every adjacent pair of the first magnetic pole and the second magnetic pole;
the rotor core is further provided with a plurality of second rotor slots which are spaced apart, and two second rotor slots arranged in a V-shape are configured in each of the first magnetic poles and each of the second magnetic poles.

By the arrangement, the space of the rotor core is fully utilized, the utility rate of the rotor core is improved, and the high power density of the motor is more easily implemented. Meanwhile, the air gap flux density waveform is improved, which helps to improve the performance of the motor.

In some embodiments, a connection part is configured between every two adjacent first cooling channels, and each connection part is disposed in the first magnetic pole or in the second magnetic pole.

By the arrangement, leakage flux caused by a magnetic path formed between the adjacent first magnetic pole and second magnetic pole is avoided, thereby reducing leakage flux of the motor rotor, and avoiding a decrease in the efficiency of the motor and an excessively high temperature rise, which helps to improve the stability and reliability of the motor.

In some embodiments, air slots are provided at both ends of each of the second rotor slots in an extending direction, respectively.

By the arrangement, the magnetic circuit structure is improved, and the leakage flux formed by the second permanent magnets in the second rotor slots is reduced.

In some embodiments, widths of two air slots of each of the second rotor slots gradually decrease towards a side facing away from each other.

By the arrangement, the second permanent magnets in the second rotor slots are limited to some extent while the magnetic circuit structure is improved, which prevents the second permanent magnets from moving along the extending direction of the second rotor slots, which would otherwise affect the mounting strength of the second permanent magnets.

In some embodiments, a second cooling channel is provided in each of the first magnetic poles and in each of the second magnetic poles, the second cooling channel runs through the rotor core along the axial direction of the rotor core, and the second cooling channel is disposed on a side of the second rotor slot facing away from the rotor shaft cavity and disposed between two adjacent second rotor slots.

By the arrangement, the cooling medium flows in the second cooling channel along the axial direction of the rotor core, so as to cool the rotor core and cool the second permanent magnets in the second rotor slots, which prevents the risk of demagnetization of the second permanent magnets due to an excessively high temperature.

In some embodiments, the rotor core is further provided with third cooling channels in communication with the first cooling channels, the third cooling channels are disposed on a side of the first cooling channels close to the second rotor slots, and a sidewall of each of the third cooling channels protrudes outwards toward a side where the second rotor slots are located relative to a sidewall of each of the first cooling channels.

By the arrangement, not only can the rotor core and the second permanent magnets be cooled, but also a simple and reliable structure is obtained, which facilitates manufacturing and processing.

According to a second aspect, the embodiments of the present disclosure provide a motor rotor, where the motor rotor includes a rotor shaft, first permanent magnets, and the rotor core according to any one of the embodiments of the first aspect, the rotor shaft is inserted into a rotor shaft cavity, and the first permanent magnets are embedded in first rotor slots.

According to a third aspect, the embodiments of the present disclosure further provide a motor, including the motor rotor according to the embodiments of the second aspect.

According to a fourth aspect, the embodiments of the present disclosure further provide a vehicle, including the motor according to the embodiments of the third aspect.

Beneficial effects of the technical solutions according to the embodiments of the present disclosure include at least the following: by setting each of the first cooling channels between the rotor shaft cavity and the first rotor slots and each of the first rotor slots to be in communication with the first cooling channel, the cooling medium flowing in the first cooling channels is in direct contact with and exchanges heat with the permanent magnets in the first rotor slots, so as to cool the permanent magnets, thereby preventing the risk of demagnetization of the permanent magnets due to an excessively high temperature, which helps to improve the performance of the motor.

### BRIEF DESCRIPTION OF DRAWINGS

To describe the technical solutions in embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other accompanying drawings from these accompanying drawings without creative efforts.
FIG. 1 is a schematic structural diagram of a rotor core according to some embodiments of the present disclosure; and
FIG. 2 is a schematic structural diagram of a rotor core according to other embodiments of the present disclosure.

The reference numerals in the accompanying drawings are respectively denoted as:
1-rotor core; 11-rotor shaft cavity; 12-first cooling channel; 13-first rotor slot; 14-first magnetic pole; 15-second magnetic pole; 16-second rotor slot; 161-air slot; 17-second cooling channel; 18-third cooling channel; 19-connection part;
100-first permanent magnet; and 200-second permanent magnet.

### DETAILED DESCRIPTION

For clearer descriptions of the objectives, technical solutions, and advantages of the present disclosure, embodiments of the present disclosure are further described in detail hereinafter with reference to the accompanying drawings.

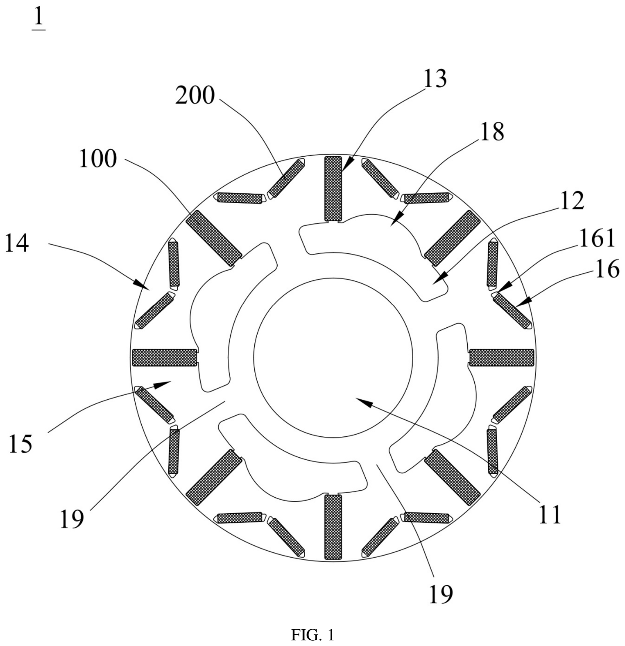

Orientation terms, such as "upper", "lower", and "side", used in the embodiments of the present disclosure are generally based on the relative relationship between orientations illustrated in FIG. 1, and these orientation terms are merely used to describe the relationship between structures more clearly, rather than describe absolute orientations. In the case that the product is placed in different gestures, the orientation may change, for example, "upper" and "lower" may be interchanged.

Unless otherwise defined, all technical terms used in the embodiments of the present disclosure have the same meaning as commonly understood by those of ordinary skill in the art.

For clearer descriptions of the technical solutions and advantages of the present disclosure, the embodiments of the present disclosure are further described in detail hereinafter with reference to the accompanying drawings.

As mentioned in the background, in the motor of the related art, the permanent magnets of the rotor may undergo demagnetization due to long-term operation in a high-temperature environment. Therefore, it is highly necessary to adopt forced heat dissipation measures to remove heat from the permanent magnet synchronous motor.

In order to improve the performance of the motor, a cooling system for cooling the rotor is provided in the related art. In the cooling system, a cooling medium for a motor rotor generally comes from a rotor shaft, and the cooling medium is introduced from the rotor shaft to cool the rotor. However, a heat source is close to the surface of the rotor, but the cooling medium is far away from the heat source, which results in a poor cooling effect, easily increases the risk of demagnetization of a permanent magnet, and affects the performance of the motor.

According to various embodiments of the present disclosure, a rotor core 1 is provided.

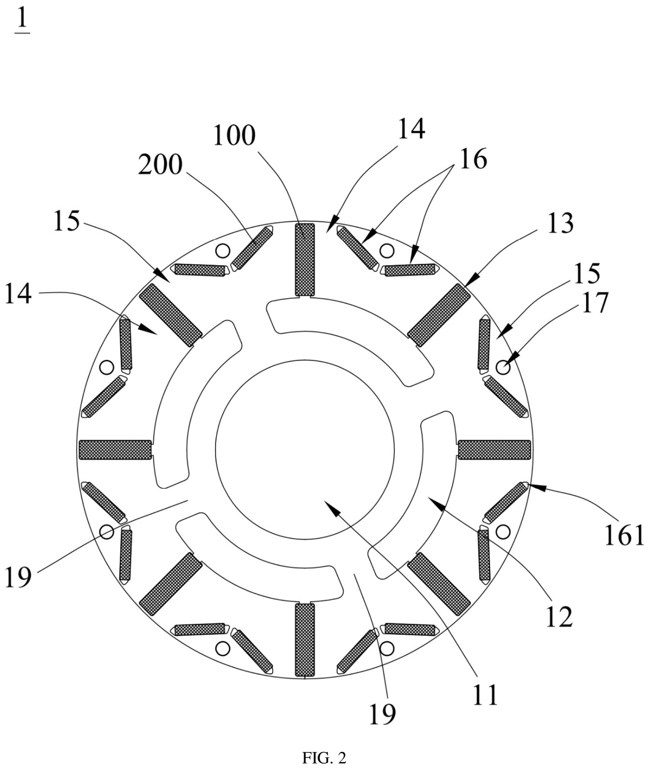

As shown in FIG. 1 and FIG. 2, a rotor shaft cavity 11, a plurality of first cooling channels 12, and a plurality of first rotor slots 13 are formed in the rotor core 1 according to the embodiments of the present disclosure. The rotor shaft cavity 11, the first cooling channels 12, and the first rotor slots 13 all run through the rotor core 1 along an axial direction of the rotor core 1. The plurality of first rotor slots 13 and the plurality of first cooling channels 12 are respectively spaced apart along a circumferential direction of the rotor core 1. Each of the first cooling channels 12 is disposed between the rotor shaft cavity 11 and the first rotor slots 13, and each of the first rotor slots 13 is in communication with the first cooling channels 12.

The rotor shaft cavity 11 of the rotor core 1 is configured to accommodate a rotor shaft, the first cooling channels 12 are configured to allow a cooling medium, such as a cooling oil, to flow, and the first rotor slots 13 are configured to accommodate first permanent magnets 100.

In some embodiments, the rotor core 1 is cylindrical, and a central axis of the rotor shaft cavity 11 is collinear with a central axis of the rotor core 1. The first rotor slots 13 are close to a side where an outer sidewall of the rotor core 1 is located, and the first cooling channels 12 are disposed at ends of the first rotor slots 13 close to the rotor shaft cavity 11.

In some embodiments, as shown in FIG. 1, the first rotor slots 13 extend along a radial direction of the rotor core 1, and the cross-sectional profiles of the first rotor slots 13 are substantially rectangular. Embedded first permanent magnets 100 are embedded in the first rotor slots 13, and a shape and dimensions of the first rotor slots 13 match a shape and dimensions of the first permanent magnets 100.

It should be understood that the "cross section" described above refers to a section obtained by cutting with a plane perpendicular to the central axis of the rotor core 1.

The shape of the first rotor slots 13 match the shapes of the first permanent magnets 100, which means that the shape of the first rotor slots 13 is the same as the shape of the first permanent magnets 100. For example, the first rotor slots 13 are rectangular slots, and the first permanent magnets 100 are rectangular blocks. The dimensions of the first rotor slots 13 match the dimensions of the first permanent magnets 100, which means that the dimensions of the first rotor slots 13 are the same as the dimensions of the first permanent magnets 100, or the dimensions of the first rotor slots 13 are slightly larger than the dimensions of the first permanent magnets 100, such that the first permanent magnets 100 can be embedded into the first rotor slots 13.

Furthermore, the plurality of first rotor slots 13 are uniformly distributed around the central axis of the rotor core 1. As shown in FIG. 1 and FIG. 2, a total of eight first rotor slots 13 are provided, and the eight first rotor slots 13 are uniformly spaced apart around the circumferential direction of the rotor core 1.

By setting the first rotor slots 13 to extend along the radial direction of the rotor core 1, the magnetic flux in the rotor core 1 can be enhanced, which helps to increase the power density of the motor.

In some embodiments, the cross-sectional profiles of the first cooling channels 12 are arc-shaped, the plurality of first cooling channels 12 are distributed around the central axis of the rotor core 1 along the circumferential direction of the rotor core 1, and form a ring-like groove .

Each of the first cooling channels 12 is in communication with at least one first rotor slot 13. For example, as shown in FIG. 1 and FIG. 2, a total of four first cooling channels 12 are provided, and each of the first cooling channels 12 is in communication with two first rotor slots 13, which ensures that each of the first rotor slots 13 is in communication with the first cooling channel 12, and the first permanent magnets 100 in the two first rotor slots 13 can both be cooled simultaneously when the cooling medium is introduced into each of the first cooling channels 12.

In the case that the cooling medium is introduced into the first cooling channels 12, it flows along the axial direction of the rotor core 1 and is in direct contact with end faces of the first permanent magnets 100 close to the rotor shaft cavity 11, which enables direct thermal exchange with the first permanent magnets 100, thereby carrying away the heat generated by the rotor core 1 and the first permanent magnets 100. Compared with the cooling system in the related art, such configuration has a better cooling effect, which is conducive to solving the problem of rotor heating caused by high rotational speed and high power density of the motor.

In the rotor core 1 according to the embodiments of the present disclosure, by setting each of the first cooling channels 12 to be disposed between the rotor shaft cavity 11 and the first rotor slots 13 and each of the first rotor slots 13 to be in communication with the first cooling channel 12, a coolant flowing in the first cooling channels 12 is in direct contact with and exchanges heat with the first permanent magnets 100 in the first rotor slots 13, so as to cool the first permanent magnets 100, thereby preventing the risk of demagnetization of the first permanent magnets 100 due to an excessively high temperature, which helps to improve the performance of the motor.

In further embodiments, the rotor core 1 includes first magnetic poles 14 and second magnetic poles 15 of opposite polarities alternately distributed along the circumferential direction of the rotor core, and the first rotor slot 13 is disposed between every adjacent pair of the first magnetic pole 14 and the second magnetic pole 15. A plurality of second rotor slots 16 spaced apart are further formed in the rotor core 1, and two second rotor slots 16 arranged in a V-shape are configured in each of the magnetic poles.

In some embodiments, the rotor core 1 is provided with eight magnetic poles, including four first magnetic poles 14 and four second magnetic poles 15. The first magnetic poles 14 are N poles, and the second magnetic poles 15 are S poles. The first magnetic poles 14 and the second magnetic poles 15 are uniformly and alternately distributed along the circumferential direction of the rotor core 1, and each of the first rotor slots 13 is disposed between an adjacent pair of first magnetic pole 14 and second magnetic pole 15.

In some embodiments, as shown in FIG. 1 and FIG. 2, each of the first magnetic poles 14 and each of the second magnetic poles 15 is provided with two second rotor slots 16. The two second rotor slots 16 are inclined to each other, and a distance between the two second rotor slots 16 gradually increases from an inner side to an outer side along the radial direction of the rotor core 1. The two second rotor slots 16 form a slot group arranged in a "V" shape, and eight such slot groups are uniformly spaced apart along the circumferential direction of the rotor core 1, such that each magnetic pole is provided with one slot group and each slot group is disposed between two adjacent first rotor slots 13.

Specifically, a second permanent magnet 200 is embedded in the second rotor slot 16. The rotor core 1 is provided with the first rotor slots 13 extending along the radial direction of the rotor core and the second rotor slots 16 arranged in a "V" shape, such that the space of the rotor core 1 is fully utilized, the utility rate of the rotor core 1 is improved, and the high power density of the motor is more easily implemented. Meanwhile, the air gap flux density waveform is improved, which helps to improve the performance of the motor.

In further embodiments, a connection part 19 is configured between every two adjacent first cooling channels 12, and each of the connection parts 19 is disposed in the first magnetic pole 14 or the second magnetic pole 15.

Specifically, the spacing between every two adjacent first cooling channels 12 in the rotor core 1 defines a connection part 19, and all connection parts 19 are disposed in the same magnetic pole. For example, all the connection parts 19 are disposed in the second magnetic poles 15 or in the first magnetic poles 14.

Exemplarily, as shown in FIG. 1 and FIG. 2, four first cooling channels 12 are provided. The four first cooling channels 12 are uniformly spaced apart around the central axis of the rotor core 1 along the circumferential direction of the rotor core 1, and define four connection parts 19, and each of the second magnetic poles 15 is provided with one connection part 19.

In the embodiments, by setting each of the connection parts 19 in the first magnetic pole 14 or in the second magnetic pole 15, leakage flux caused by a magnetic path formed between adjacent first magnetic pole 14 and second magnetic pole 15 is avoided, thereby reducing leakage flux of the motor rotor, and avoiding a decrease in the efficiency of the motor and an excessively high temperature rise, which helps to improve the stability and reliability of the motor.

In further embodiments, air slots 161 are provided at both ends of each of the second rotor slots 16 in an extending direction, respectively.

As shown in FIG. 1 and FIG. 2, air slots 161 are provided at both ends of each of the second rotor slots 16, and the air slots 161 run through the rotor core 1 along the axial direction of the rotor core 1.

In the embodiments, by setting the air slots 161, the magnetic circuit structure can be improved, and the leakage flux formed in the second permanent magnets 200 in the second rotor slots 16 can be reduced.

Furthermore, widths of the two air slots 161 of each of the second rotor slots 16 gradually decrease towards a side facing away from each other.

Exemplarily, the air slots 161 are semicircular, triangular, semi-elliptical, or other shapes, and the width of each of the air slots 161 gradually decreases along a direction from a center to an end portion of the second rotor slot 16.

As shown in FIG. 1 and FIG. 2, the cross-sectional profile of the air slots 161 is triangular, and each of the air slots 161 gradually narrows toward a direction away from the air slot 161 on the opposite side, such that the second permanent magnets 200 in the second rotor slots 16 are limited to some extent while the magnetic circuit structure is improved, which prevents the second permanent magnets 200 from moving along the extending direction of the second rotor slots 16 and affecting the mounting strength of the second permanent magnets 200.

In some embodiments, each of the first magnetic poles 14 and each of the second magnetic poles 15 are both provided with a second cooling channel 17. The second cooling channel 17 runs through the rotor core 1 along the axial direction of the rotor core 1, and the second cooling channel 17 is disposed on a side of the second rotor slot 16 facing away from the rotor shaft cavity 11 and disposed between two adjacent second rotor slots 16.

As shown in FIG. 1, eight second cooling channels 17 are provided, and each of the first magnetic poles 14 and each of the second magnetic poles 15 are both provided with one second cooling channel 17.

The second cooling channel 17 is close to the outer sidewall of the rotor core 1 and is disposed between the two second rotor slots 16 of the magnetic pole where the second cooling channel 17 is located. The second cooling channel 17 is configured to allow a cooling medium to flow. The cooling medium flows in the second cooling channel 17 along the axial direction of the rotor core 1, so as to cool the rotor core 1 and indirectly cool the second permanent magnets 200 in the second rotor slots 16, thereby preventing the risk of demagnetization of the second permanent magnets 200 due to an excessively high temperature.

Optionally, the second cooling channel 17 is in communication with the two second rotor slots 16 in the magnetic pole where the second cooling channel 17 is located, such that the cooling medium flowing through the second cooling channel 17 is in direct contact with the second permanent magnets 200 in the second rotor slots 16, thereby improving the cooling effect on the second permanent magnets 200.

Optionally, a plurality of second cooling channels 17 are disposed in each of the first magnetic poles 14 and each of the second magnetic poles 15, so as to improve the cooling effect on the rotor core 1 and the second permanent magnets 200.

Optionally, the cross-sectional profiles of the second cooling channels 17 are circular, elliptical, rectangular or in other polygonal shapes, which is not specifically limited in the present disclosure. Exemplarily, as shown in FIG. 1, the cross-sectional profile of the second cooling channel 17 is in a circular shape.

Optionally, the second cooling channel 17 is disposed on a side, which is close to the rotor shaft cavity 11, of the two second rotor slots 16 in the magnetic pole where the second cooling channel 17 is located.

In one embodiment, third cooling channels 18 in communication with the first cooling channel 12 are further provided in the rotor core 1. The third cooling channels 18 are disposed on a side of the first cooling channels 12 close to the second rotor slots 16, and a sidewall of each of the third cooling channels 18 protrudes outwards toward a side where the second rotor slots 16 are located relative to a sidewall of each of the first cooling channels 12.

As shown in FIG. 2, each of the third cooling channels 18 is disposed in a middle portion of the first cooling channel 12 and between two adjacent first rotor slots 13, and each of the third cooling channels 18 protrudes towards the two second rotor slots 16 of the magnetic pole where the third cooling channel 18 is located. The cross-sectional profile of the third cooling channels 18 may be in a sector shape, a rectangular shape, a triangular shape, a circular shape, an elliptical shape, or other shapes, which is not specifically limited in the present disclosure. For example, as shown in FIG. 2, a sidewall of the third cooling channel 18 is in an arc shape and protrudes towards a side where the second rotor slots 16 are located.

The third cooling channel 18 is configured to allow a cooling medium to flow. The cooling medium flows in the third cooling channel 18 along the axial direction of the rotor core 1, so as to cool the rotor core 1 and indirectly cool the second permanent magnets 200 in the second rotor slots 16, thereby preventing the risk of demagnetization of the second permanent magnets 200 due to excessively high temperature.

By setting the third cooling channel 18 to be in communication with the first cooling channel 12, it can not only cool the rotor core 1 and the second permanent magnets 200, but can also cause the structure to be simple and reliable, which facilitates manufacturing and processing.

The embodiments of the present disclosure further provide a motor rotor. The motor rotor includes a rotor shaft, first permanent magnets 100, and the rotor core 1 according to any one of the above embodiments. The rotor shaft is inserted into a rotor shaft cavity 11, and the first permanent magnets 100 are embedded in first rotor slots 13.

In some embodiments, as shown in FIG. 1, the first rotor slots 13 extend along a radial direction of the rotor core 1, and the cross-sectional profiles of the first rotor slots 13 are substantially rectangular. The embedded first permanent magnets 100 are embedded in the first rotor slots 13, and a shape and dimensions of the first rotor slots 13 match a shape and dimensions of the first permanent magnets 100.

By setting the first rotor slots 13 to extend along the radial direction of the rotor core 1 and the first permanent magnets 100 to be embedded in the first rotor slots 13, the magnetic flux in the rotor core 1 can be enhanced, which helps to improve the power density of the motor.

In the motor rotor according to the embodiments of the present disclosure, by setting each of the first cooling channels 12 to be disposed between the rotor shaft cavity 11 and the first rotor slots 13 and each of the first rotor slots 13 to be in communication with the first cooling channel 12, a coolant flowing in the first cooling channels 12 is in direct contact with and exchanges heat with the first permanent magnets 100 in the first rotor slots 13, so as to cool the first permanent magnets 100, thereby preventing the risk of demagnetization of the first permanent magnets 100 due to an excessively high temperature, which helps to improve the performance of the motor.

In further embodiments, the rotor core 1 includes first magnetic poles 14 and second magnetic poles 15 of opposite polarities alternately distributed along the circumferential direction of the rotor core, and the first rotor slot 13 is disposed between every adjacent pair of the first magnetic pole 14 and the second magnetic pole 15. A plurality of second rotor slots 16 spaced apart are further formed in the rotor core 1, and two second rotor slots 16 arranged in a V-shape are configured in each of the magnetic poles.

Specifically, a second permanent magnet 200 is embedded in the second rotor slot 16. The rotor core 1 is provided with the first rotor slots 13 extending along the radial direction of the rotor core and the second rotor slots 16 arranged in a "V" shape, such that the space of the rotor core 1 is fully utilized, the utility rate of the rotor core 1 is improved, and the high power density of the motor is more easily implemented. Meanwhile, the air gap flux density waveform is improved, which helps to improve the performance of the motor.

The embodiments of the present disclosure further provide a motor, including the motor rotor according to any one of the above embodiments.

The embodiments of the present disclosure further provide a vehicle, including the motor according to the above embodiments. Exemplarily, the vehicle is a new energy vehicle such as an electric vehicle or a hybrid vehicle.

In the present disclosure, the terms "first" and "second" are used merely for descriptive purposes, and should not be understood as indicating or implying relative importance, nor as implicitly specifying the quantity of the indicated technical features. Therefore, the features defined by "first" and "second" may explicitly or implicitly include at least one of the features. In the description of the present disclosure, "a plurality of" refers to at least two, e.g., two or three, unless otherwise explicitly defined.

It should be understood that the terms used in the description of the present disclosure are only for the purpose of describing particular embodiments and are not intended to limit the present disclosure. As used in the description and appended claims of the present disclosure, the singular forms "a", "an", and "the" are intended to include the plural forms as well, unless otherwise clearly indicated in the context.

The terms "include" and "comprise" indicate the presence of stated features, integers, steps, operations, elements, and/or components, but do not preclude the presence or addition of one or more other features, integers, steps, operations, elements, components, and/or groups thereof.

In the present disclosure, unless otherwise clearly specified and defined, the terms "mounting", "connection", "linkage", "fixation", and the like should be comprehended in a broad sense and may, for example, refer to a fixed connection, a detachable connection, or an integrated connection; a direct connection or an indirect connection via an intermediate; or the communication between the interiors of two elements or the interaction between two elements. For those of ordinary skill in the art, the specific meanings of the above terms in the present disclosure are interpreted according to specific conditions.

Other embodiments of the present disclosure are apparent to those skilled in the art from consideration of the specification and practice of the present disclosure disclosed herein. The present disclosure is intended to cover any variations, uses, or adaptations of the present disclosure following the general principles of the present disclosure and including known common knowledge or customary technical means undisclosed in the art of the present disclosure. The specification and embodiments are only considered exemplary.

Finally, it should be noted that the above embodiments are merely intended to illustrate the technical solutions of the present disclosure, rather than limiting them. Although the present disclosure is described in detail with reference to the above embodiments, it should be understood by those of ordinary skill in the art that, the technical solutions described in the above embodiments can still be modified, or some technical features can be equivalently replaced. Such modifications and substitutions do not depart from the spirit and scope of the technical solutions of the embodiments of the present disclosure.

## Claims

1. A rotor core (1), wherein the rotor core (1) is provided with a rotor shaft cavity (11), a plurality of first cooling channels (12), and a plurality of first rotor slots (13);
the rotor shaft cavity (11), the first cooling channels (12), and the first rotor slots (13) all run through the rotor core (1) along an axial direction of the rotor core (1);
the first rotor slots (13) and the first cooling channels (12) are respectively spaced apart along a circumferential direction of the rotor core (1); and
each of the first cooling channels (12) is disposed between the rotor shaft cavity (11) and the first rotor slots (13), and each of the first rotor slots (13) is in communication with the first cooling channels (12).

2. The rotor core (1) according to claim 1, wherein the rotor core (1) comprises first magnetic poles (14) and second magnetic poles (15) of opposite polarities alternately distributed along the circumferential direction of the rotor core (1), and the first rotor slot (13) is provided between every adjacent pair of the first magnetic pole (14) and the second magnetic pole (15); and
the rotor core (1) is further provided with a plurality of second rotor slots (16) which are spaced apart, and two second rotor slots (16) arranged in a V-shape are configured in each of the first magnetic poles (14) and each of the second magnetic poles (15).

3. The rotor core (1) according to claim 2, wherein a connection part (19) is configured between every two adjacent first cooling channels (12), and each connection part (19) is disposed in the first magnetic pole (14) or in the second magnetic pole (15).

4. The rotor core (1) according to claim 2 or 3, wherein air slots (161) are provided at both ends of each of the second rotor slots (16) in an extending direction, respectively.

5. The rotor core (1) according to claim 4, wherein widths of two air slots (161) of each of the second rotor slots (16) gradually decrease towards a side facing away from each other.

6. The rotor core (1) according to any one of claims 2 to 5, wherein a second cooling channel (17) is provided in each of the first magnetic poles (14) and in each of the second magnetic poles (15), the second cooling channel (17) runs through the rotor core (1) along the axial direction of the rotor core (1), and the second cooling channel (17) is disposed on a side of the second rotor slot (16) facing away from the rotor shaft cavity (11) and disposed between two adjacent second rotor slots (16).

7. The rotor core (1) according to any one of claims 2 to 6, wherein the rotor core (1) is further provided with third cooling channels (18) in communication with the first cooling channels (12), the third cooling channels (18) are disposed on a side of the first cooling channels (12) close to the second rotor slots (16), and a sidewall of each of the third cooling channels (18) protrudes outwards toward a side where the second rotor slots (16) are located relative to a sidewall of each of the first cooling channels (12).

8. A motor rotor, wherein the motor rotor comprises a rotor shaft, first permanent magnets (100), and the rotor core (1) as defined in any one of claims 1 to 7, the rotor shaft is inserted into a rotor shaft cavity (11), and the first permanent magnets (100) are embedded in first rotor slots (13).

9. A motor, comprising the motor rotor as defined in claim 8.

10. A vehicle, comprising the motor as defined in claim 9.
